# FASCICULE DE BREVET EUROPEEN

(11) **EP 2 938 694 B1**
(45) Date de publication et mention de la délivrance du brevet: **17.07.2019**
(21) Numéro de dépôt: 13815074.3
(22) Date de dépôt: 06.12.2013
(51) Int. Cl.: C09K 5/04

(54) **COMPOSITION AZEOTROPIQUE OU QUASI-AZEOTROPIQUE DE CHLOROMETHANE**
AZEOTROPE ODER QUASI-AZEOTROPE ZUSAMMENSETZUNG VON CHLORMETHAN
AZEOTROPIC OR QUASI-AZEOTROPIC COMPOSITION OF CHLOROMETHANE

(30) Priorité: 26.12.2012 FR 1262763
(43) Date de publication de la demande: 04.11.2015
(73) Titulaire: Arkema France, 92700 Colombes (FR)
(72) Inventeur: DEUR-BERT, Dominique, F-69390 Charly (FR); WENDLINGER, Laurent, F-69510 Soucieu En Jarrest (FR)
(74) Mandataire: Dang, Doris
(86) Numéro de dépôt international: PCT/FR2013/052975
(87) Numéro de publication internationale: WO 2014/102478

(56) Documents cités:
- EP-A1- 0 495 543
- EP-A1- 2 837 613
- WO-A1-2013/096005
- US-A1- 2008 051 612
- US-A1- 2012 261 252
- US-B2- 7 629 397

## Description

La présente invention concerne des compositions quasi-azéotropique ou azéotropique comprenant du chlorométhane.

Les fluides à bases d'halogénocarbones ont trouvés de nombreuses applications dans des domaines industrielles variés, notamment en tant que fluide de transfert de chaleur, propulseurs, agents moussants, agents gonflants, diélectriques gazeux, milieu de polymérisation ou monomère, fluides supports, agents pour abrasifs, agents de séchage et fluides pour unité de production d'énergie.

Une importance particulière est donnée aux fluides ayant un faible impact sur l'environnement.

Le document US 2008/0051612 décrit un procédé de séparation entre HF et une fluorooléfine. Le document US 2012/0261252 décrit un procédé de séparation du HFO-1234yf et du HF par distillation azéotropique. Le document EP0495543 décrit des compositions azéotropiques comprenant 1,1,1,2-tétrafluoroéthane et le chlorure de méthyle. Le document US 7,629,397 décrit des compositions comprenant du chlorure de méthyle.

L'avantage d'utiliser des fluides azéotropiques ou quasi-azéotropiques est qu'ils ne fractionnent pas lors de processus d'évaporation et agissent (quasiment) comme un corps pur. Cependant il est difficile d'identifier de nouveaux fluides répondant à ces caractéristiques, puisque les azéotropes ne sont pas prévisibles.

L'invention concerne ainsi une composition azéotropique ou quasi-azéotropique comprenant du chloromethane, du fluorure d'hydrogène et au moins un ou plusieurs composé(s) choisi parmi le 3,3,3-trifluoropropene, le E/Z-1,1,3,3,3-pentafluoropropene, le E/Z-1,2,3,3,3-pentafluoropropene, le 1,1-difluoroethane, le E-1,3,3,3-tetrafluoropropene.

L'expression « quasi-azéotropique » a un sens large et est destinée à inclure les compositions qui sont strictement azéotropique et celles qui se comportent comme un mélange azéotropique.

Un mélange est azéotropique lorsque que la pression au point de rosée est égale à celle au point de formation de bulles, ce qui signifie que la composition de vapeur est égale à celle du liquide condensée.

Un mélange est considéré comme quasi-azéotropique lorsque la différence de pression entre la pression au point de rosée et la pression au point de formation de bulles est inférieure ou égale à 5 %, sur la base de la pression au point de formation de bulles.

Selon un mode de mise en oeuvre, la composition comprend, préférentiellement consistant essentiellement en, soit (de) 0,5 à 70 % en mole de chlorométhane et de 99,5 à 30 % en mole d'au moins un composé choisi parmi le 2,3,3,3-tetrafluoropropene, le 1,1-difluoroethane, le 3,3,3-trifluoropropene, et le 1,1,1,2-tetrafluoroethane, soit (de) 55 à 95 % en mole de chlorométhane et (de) 45 à 5 % en mole d'au moins un composé choisi parmi le 1,1,1,2,2-pentafluoropropane, le E/Z-1,1,3,3,3-pentafluoropropene, le E/Z-1,2,3,3,3-pentafluoropropene, le E-1,3,3,3-tetrafluoropropene.

Selon un mode de réalisation préféré, la composition comprend, préférentiellement consistant essentiellement en, du chloromethane, de préférence de 10 à 50% molaire, et d'au moins composé(s) choisi(s) parmi le 2,3,3,3-tetrafluoropropene, le 3,3,3-trifluoropropene, le E/Z-1,1,3,3,3-pentafluoropropene, le E/Z-1,2,3,3,3-pentafluoropropene, le E-1,3,3,3-tetrafluoropropene, préférentiellement le 2,3,3,3-tetrafluoropropene, de préférence représentant 50 à 90% molaire.

Selon un mode de réalisation particulièrement préféré, la composition comprend, préférentiellement consistant essentiellement en, (de) 10 % à 45 % en mole de chloromethane et (de) 90 % à 55 % mole de 2,3,3,3-tetrafluoropropene.

Dans un mode de mise en oeuvre, la composition comprend, préférentiellement consistant essentiellement en, (de) 0,5 % à 50 % en mole de chloromethane et (de) 95,5 % à 50 % en mole de 1,1,1,2-tetrafluoroethane.

Dans un autre mode de mise en oeuvre, la composition comprend, préférentiellement consistant essentiellement en, (de) 35 % à 65 % en mole de chloromethane et (de) 65 % à 35 % en mole de 3,3,3-trifluoropropene.

Selon un mode de réalisation, la composition comprend, préférentiellement consistant essentiellement en, (de) 60 % à 90 % en mole de chloromethane et (de) 40 % à 10 % en mole de 1,1,1,2,2-pentafluoropropane.

Selon un autre mode de réalisation, la composition comprend, préférentiellement consistant essentiellement en, (de) 55 % à 85 % en mole de chloromethane et (de) 45 % à 15 % en mole de E/Z-1,1,3,3,3-pentafluoropropene.

Selon une possibilité offerte par l'invention, la composition comprend, préférentiellement consistant essentiellement en, (de) 60 % à 90 % en mole de chloromethane et (de) 40 % à 10 % en mole de E/Z-1,2,3,3,3-pentafluoropropene.

Dans un mode de mise oeuvre, la composition comprend, préférentiellement consistant essentiellement en, (de) 5 % à 70 % en mole, de préférence de 10 à 60% molaire de chloromethane et (de) 95 % à 30 % en mole, de préférence 40 à 90% molaire de 1,1-difluoroethane.

Dans un autre mode de mise oeuvre, la composition comprend, préférentiellement consistant essentiellement en, (de) 65 % à 95 % en mole de chloromethane et (de) 35 % à 5 % en mole de E-1,3,3,3-tetrafluoropropene.

Selon l'invention, la composition comprend du fluorure d'hydrogène.

Selon une possibilité offerte par l'invention particulièrement préférée, la composition selon l'invention comprend, préférentiellement consistant essentiellement en, (de) 20 % à 45 % en mole de HF, 5 % à 20 % en mole de chloromethane et 35 % à 70 % en mole de 2,3,3,3-tetrafluoropropene.

Selon un mode de réalisation, la composition selon l'invention comprend, préférentiellement consistant essentiellement en, (de) 15 % à 45 % en mole de HF, 35 % à 60 % en mole de chloromethane et 15 % à 30 % en mole de 1,1,1,2,2-pentafluoropropane.

Selon un autre mode de réalisation, la composition selon l'invention est caractérisée en ce que qu'elle comprend, préférentiellement consistant essentiellement en, (de) 15 % à 45 % en mole de HF, 1 % à 30 % en mole de chloromethane et 30 % à 85 % en mole de 1,1-difluoroethane.

Selon un mode de mise en oeuvre, la composition selon l'invention comprend, préférentiellement consistant essentiellement en, (de) 15 % à 40 % en mole de HF, 40 % à 70 % en mole de chloromethane et 10 % à 30 % en mole de E/Z-1,3,3,3-tetrafluoropropene.

Selon un autre mode de mise en oeuvre, la composition selon l'invention a une température d'ébullition comprise entre -40 °C à 70 °C à une pression comprise entre 1 et 15 bars.

L'invention concerne également l'utilisation d'un fluide comprenant la composition selon l'invention en tant que fluide de transfert de chaleur, propulseurs, agents moussants, agents gonflants, diélectriques gazeux, milieu de polymérisation ou monomère, fluides supports, agents pour abrasifs, agents de séchage et fluides pour unité de production d'énergie.

De préférence, l'invention concerne l'utilisation d'un fluide comprenant la composition selon l'invention en tant que fluide de transfert de chaleur dans une installation de réfrigération ou pompe à chaleur.

L'invention concerne également une installation de transfert de chaleur comprenant un circuit de compression de vapeur contenant un fluide comprenant une composition selon l'invention en tant que fluide de transfert de chaleur ou contenant un fluide de transfert de chaleur tel que décrit ci-dessus.

Selon un mode de réalisation, l'installation est choisie parmi les installations mobiles ou stationnaires de chauffage par pompe à chaleur, de climatisation, et notamment de climatisation automobile ou de climatisation stationnaire centralisée, de réfrigération, de congélation et les cycles de Rankine ; et qui est de préférence une installation de climatisation.

L'invention concerne également un procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est un fluide comprenant une composition selon l'invention.

Par «fluide de transfert de chaleur », on entend un fluide susceptible d'absorber de la chaleur en s'évaporant à basse température et basse pression et de rejeter de la chaleur en se condensant à haute température et haute pression, dans un circuit de compression de vapeur.

Un fluide de transfert de chaleur comprend éventuellement un ou plusieurs additifs qui ne sont pas des composés de transfert de chaleur pour l'application envisagée. Les additifs peuvent notamment être choisis parmi les lubrifiants, les nanoparticules, les stabilisants, les tensioactifs, les agents traceurs, les agents fluorescents, les agents odorants et les agents de solubilisation, tel que bien connus de l'homme du métier.

Dans ce qui suit, les composés suivants représentent :
- chloromethane : HCC-40 ou F40
- 2,3,3,3-tetrafluoropropene : HFO-1234yf ou F1234yf
- 3,3,3-trifluoropropene : HFO-1243zf ou F1243zf
- 1,1,1,2-tetrafluoroethane : HFC-134a ou F134a
- 1,1,1,2,2-pentafluoropropane : HFC-245cb ou F245cb
- E/Z-1,1,3,3,3-pentafluoropropene : HFO-1225zc ou F1225zc
- E/Z-1,2,3,3,3-pentafluoropropene : HFO-1225ye ou F1225ye
- 1,1-difluoroethane : HFC-152a ou F152a
- E-1,3,3,3-tetrafluoropropene : HFO-1234ze-E ou F1234ze-E

Des compositions azéotropiques à différentes températures et pressions sont présentées dans le tableau 1 ci-dessous :

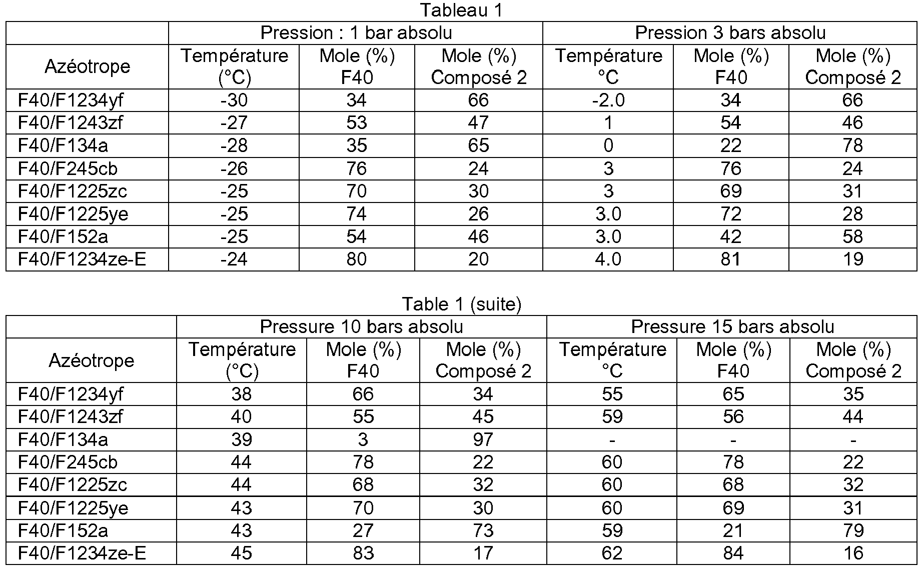

## Revendications

1. Composition azéotropique ou quasi-azéotropique comprenant du chlorométhane, du fluorure d'hydrogène et au moins un ou plusieurs composé(s) choisi parmi le 3,3,3-trifluoropropene, le E/Z-1,1,3,3,3-pentafluoropropene, le E/Z-1,2,3,3,3-pentafluoropropene, le 1,1-difluoroethane, le E-1,3,3,3-tetrafluoropropene.

2. Composition selon la revendication 1 **caractérisée en ce que** qu'elle comprend, préférentiellement consistant essentiellement en, de 15 % à 45 % en mole de HF, 1 % à 30 % en mole de chlorométhane et 30 % à 85 % en mole de 1,1-difluoroethane.

3. Composition selon la revendication 1 **caractérisée en ce que** qu'elle comprend, préférentiellement consistant essentiellement en, de 15 % à 40 % en mole de HF, 40 % à 70 % en mole de chlorométhane et 10 % à 30 % en mole de E/Z-1,3,3,3-tetrafluoropropene.

4. Composition selon l'une quelconque des revendications précédentes **caractérisée en ce qu'**elle a une température d'ébullition comprise entre -40 °C à 70 °C et une pression comprise entre 1 et 15 bars.

5. Composition azéotropique ou quasi-azéotropique **caractérisée en ce que** qu'elle comprend, préférentiellement consistant essentiellement en, de 20 % à 45 % en mole de HF, 5 % à 20 % en mole de chlorométhane et 35 % à 70 % en mole de 2,3,3,3-tetrafluoropropene.

6. Composition azéotropique ou quasi-azéotropique **caractérisée en ce que** qu'elle comprend, préférentiellement consistant essentiellement en, de 15 % à 45 % en mole de HF, 35 % à 60 % en mole de chlorométhane et 15 % à 30 % en mole de 1,1,1,2,2-pentafluoropropane.

## Patentansprüche

1. Azeotrope oder quasi-azeotrope Zusammensetzung, umfassend Chlormethan, Fluorwasserstoff und mindestens eine oder mehrere Verbindung(en) ausgewählt aus 3,3,3-Trifluorpropen, E/Z-1,1,3,3,3-Pentafluorpropen, E/Z-1,2,3,3,3-Pentafluorpropen, 1,1-Difluorethan, E-1,3,3,3-Tetrafluorpropen.

2. Zusammensetzung nach Anspruch 1, **dadurch gekennzeichnet, dass** sie 15 Mol-% bis 45 Mol-% HF, 1 Mol-% bis 30 Mol-% Chlormethan und 30 Mol-% bis 85 Mol-% 1,1-Difluorethan umfasst, vorzugsweise hauptsächlich daraus besteht.

3. Zusammensetzung nach Anspruch 1, **dadurch gekennzeichnet, dass** sie 15 Mol-% bis 40 Mol-% HF, 40 Mol-% bis 70 Mol-% Chlormethan und 10 Mol-% bis 30 Mol-% E/Z-1,3,3,3-Tetrafluorpropen umfasst, vorzugsweise hauptsächlich daraus besteht.

4. Zusammensetzung nach einem der vorstehenden Ansprüche, **dadurch gekennzeichnet, dass** sie eine Siedetemperatur zwischen -40 °C und 70 °C und einen Druck zwischen 1 und 15 bar aufweist.

5. Azeotrope oder quasi-azeotrope Zusammensetzung, **dadurch gekennzeichnet, dass** sie 20 Mol-% bis 45 Mol-% HF, 5 Mol-% bis 20 Mol-% Chlormethan und 35 Mol-% bis 70 Mol-% 2,3,3,3-Tetrafluorpropen umfasst, vorzugsweise hauptsächlich daraus besteht.

6. Azeotrope oder quasi-azeotrope Zusammensetzung, **dadurch gekennzeichnet, dass** sie 15 Mol-% bis 45 Mol-% HF, 35 Mol-% bis 60 Mol-% Chlormethan und 15 Mol-% bis 30 Mol-% 1,1,1,2,2-Pentafluorpropan umfasst, vorzugsweise hauptsächlich daraus besteht.

## Claims

1. Azeotropic or near-azeotropic composition comprising chloromethane, hydrogen fluoride and at least one or more compound(s) chosen among 3,3,3-trifluoropropene, E/Z-1,1,3,3,3-pentafluoropropene, E/Z-1,2,3,3,3-pentafluoropropene, 1,1-difluoroethane, E-1,3,3,3-tetrafluoropropene.

2. Composition according to claim 1, **characterised in that** it comprises, and preferably consists essentially of, from 15 mol% to 45 mol% of hydrogen fluoride;, from 1 mol% to 30 mol% of chloromethane and from 30 mol% to 85 mol% of 1,1-difluoroethane.

3. Composition according to claim 1, **characterised in that** it comprises, and preferably consists essentially of, from 15 mol% to 40 mol% of hydrogen fluoride, from 40 mol% to 70 mol% of chloromethane and from 10 mol% to 30 mol% of E/Z-1,3,3,3-tetrafluoropropene.

4. Composition according to any of the preceding claims, **characterised in that** it has a boiling point comprised in a range from -40°C to 70°C and a pressure comprised in a range from 1 to 15 bars.

5. Azeotropic or near-azeotropic composition **characterised in that** it comprises, and preferably consists essentially of, from 20 mol% to 45 mol% of hydrogen fluoride, from 5 mol% to 20 mol% of chloromethane and from 35 mol% to 70 mol% of 2,3,3,3-tetrafluoropropene.

6. Azeotropic or near-azeotropic composition **characterised in that** it comprises, and preferably consists essentially of, from 15 mol% to 45 mol% of hydrogen fluoride, from 35 mol% to 60 mol% of chloromethane and from 15 mol% to 30 mol% of 1,1,1,2,2-pentafluoropropane.
